(19) Europäisches Patentamt
European Patent Office
Office européen des brevets

(11) EP 1 000 105 B1

(12) **EUROPÄISCHE PATENTSCHRIFT**

(45) Veröffentlichungstag und Bekanntmachung des Hinweises auf die Patenterteilung:
**09.04.2003 Patentblatt 2003/15**

(21) Anmeldenummer: **98942584.8**

(22) Anmeldetag: **21.07.1998**

(51) Int Cl.[7]: **C08G 64/06**, G02B 1/04, G11B 7/00

(86) Internationale Anmeldenummer:
**PCT/EP98/04543**

(87) Internationale Veröffentlichungsnummer:
**WO 99/006465 (11.02.1999 Gazette 1999/06)**

(54) **COPOLYCARBONATE AUF BASIS VON INDANBISPHENOLEN**

COPOLYCARBONATES WITH AN INDAN BISPHENOL BASE

COPOLYCARBONATES A BASE D'INDANBISPHENOLS

(84) Benannte Vertragsstaaten:
**DE ES NL**

(30) Priorität: **02.08.1997 DE 19733569**

(43) Veröffentlichungstag der Anmeldung:
**17.05.2000 Patentblatt 2000/20**

(73) Patentinhaber: **Bayer Aktiengesellschaft
51368 Leverkusen (DE)**

(72) Erfinder:
- **WESTERNACHER, Stefan
Seabrook, TX 77586 (US)**
- **KÖNIG, Annett
D-47800 Krefeld (DE)**
- **STEBANI, Jürgen
D-47800 Krefeld (DE)**
- **BRUDER, Friedrich-Karl
D-47800 Krefeld (DE)**
- **HAESE, Wilfried
D-51519 Odenthal (DE)**

(56) Entgegenhaltungen:
**EP-A- 0 213 413**
**EP-A- 0 321 831**
**EP-A- 0 362 792**
**FR-A- 2 347 395**
**US-A- 5 703 197**

- **CHEMICAL ABSTRACTS, vol. 106, no. 20, 18. Mai 1987 Columbus, Ohio, US; abstract no. 166296, XP002083977 & JP 61 148401 A (MITSUI TOATSU CHEM.) 7. Juli 1986 in der Anmeldung erwähnt**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 000 105 B1

Printed by Jouve, 75001 PARIS (FR)

## Beschreibung

Gegenstand der vorliegenden Erfindung sind neue Copolycarbonate enthaltend als wiederkehrende, bifunktionelle Carbonatstruktureinheiten

A) wenigstens eine der Carbonatstruktureinheiten der Formel (I)

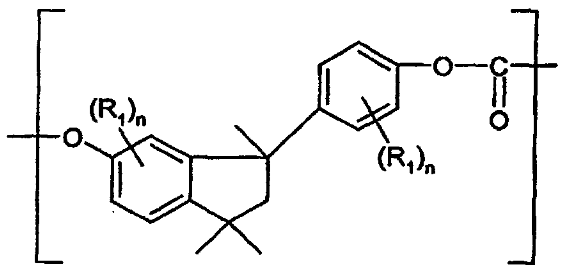

(I),

worin die Reste

$R_1$ unabhängig voneinander, jeweils für einen $C_1$-$C_{12}$-Alkylrest, vorzugsweise $C_1$-$C_3$-Alkylrest, besonders bevorzugt Methylrest, ein Halogen, vorzugsweise Chlor oder Brom, und

n für 0, stehen,

und

B) wenigstens eine der von A unterschiedlichen, weiteren bifunktionellen Carbonatstruktureinheiten der Formel (II)

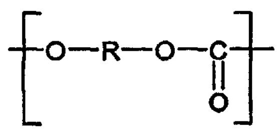

(II),

worin der Rest -O-R-O- für beliebige Diphenolat-Reste steht,
in denen -R- ein aromatischer Rest mit 6 bis 40 C-Atomen ist, der einen oder mehrere aromatische oder kondensierte, gegebenenfalls Heteroatome enthaltende aromatische Kerne enthalten und gegebenenfalls mit $C_1$-$C_{12}$-Alkylresten oder Halogen substituiert sein und aliphatische Reste, cycloaliphatische Reste, aromatische Kerne oder Heteroatome als Brückglieder enthalten kann,
mit der Ausnahme von wenigstens einer der bifunktionellen Carbonatstruktureinheiten der Formel (III)

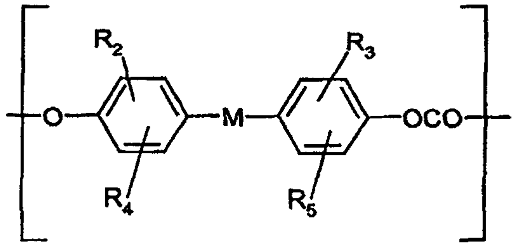

(III),

in der M für einen divalenten Kohlenwasserstoffrest mit 1 bis 8 C-Atomen, O, CO, S, SO oder $SO_2$ steht und $R_2$ bis $R_5$ gleich oder verschieden, jeweils für Wasserstoff oder ein Kohlenwasserstoffradikal mit 1 bis 5

C-Atomen stehen, in Mengen von 5 bis 95 %, bezogen auf die Gesamtmolzahl der Struktureinheiten der Formeln (I) und (III).

Ferner betrifft die vorliegende Erfindung die Verwendung der neuen Copolycarbonate zur Herstellung von Formkörpern jeder Art, vorzugsweise von optischen Artikeln.

Für die Speicherung von optischen Informationen auf optischen gegebenenfalls mehrfach lesbaren und wiederbeschreibbaren Datenträgern oder Compakt-Disks müssen solche Massenspeicher nicht nur eine ausreichende Durchlässigkeit des Lichtes in dem entsprechenden Wellenbereich und eine ausgezeichnete optische Homogenität, d.h. eine möglichst niedrige Doppelbrechung haben, sondern auch eine gute mechanische Belastbarkeit aufweisen.

Aus der Japanischen Offenlegungsschrift Nr. Sho 61-148401 sind Polycarbonate auf Basis von Indanbisphenol bekannt, die gegebenenfalls bis zu 95 mol-% weiterer, aromatischer, bifunktioneller Carbonatstruktureinheiten der Formel (III) enthalten können. Optische Artikel aus entsprechenden, ganz speziell aufgebauten Copolycarbonaten weisen gegenüber optischen Artikeln aus z.B. Acrylatharzen eine niedrigere Doppelbrechung, geringere Feuchtigkeitsabsorption und eine bessere Wärmebeständigkeit auf.

In EP-A 321 831 werden Blends aus Polycarbonaten, enthaltend methylsubstituierte Indanbisphenole als Comonomere, und Polystyrolen als geignete CD-Substrate beschrieben. Es findet sich jedoch kein Hinweis darauf, dass Copolycarbonate, enthaltend Indanbisphenole als Comonomer auch ohne Blendbildung mit Polystyrolen als CD-Substrat geeignet sein könnten.

Aufgabe der vorliegenden Erfindung war es, neue Copolycarbonate auf Basis von Indanbisphenolen zur Verfügung zu stellen, die u.a. den hohen Anforderungen an moderne, optische Datenträger, insbesondere optische Massenspeicher, genügen.

Diese neuen Copolycarbonate enthalten als wiederkehrende, bifunktionelle Carbonatstruktureinheiten

A) wenigstens eine der bifunktionellen Carbonatstruktureinheiten der Formel (I)

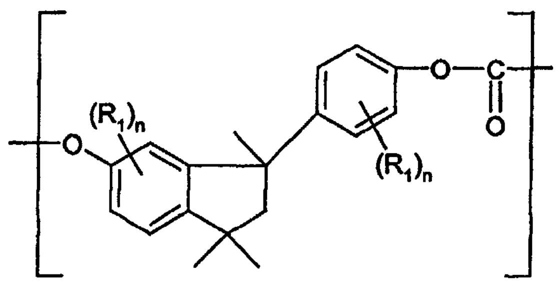

(I),

worin die Reste

$R_1$ und n die vorstehend angegebene Bedeutung haben

und

B) wenigstens eine der von A unterschiedlichen, weiteren bifunktionellen Carbonatstruktureinheiten der Formel (II)

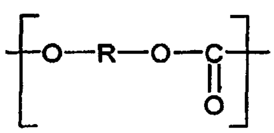

(II),

worin der Rest -O-R-O- und der Rest R die vorstehend angegebene Bedeutung haben,

mit Ausnahme von

C) Copolycarbonaten aufgebaut aus wiederkehrenden, bifunktionellen Carbonatstruktureinheiten der oben angegebenen Formel (I), in der die Reste $R_1$ unabhängig voneinander, jeweils für einen Kohlenwasserstoffrest mit 1 bis 5 C-Atomen und n für eine ganze Zahl von 0 bis 2 stehen, und aus wenigstens einer der wiederkehrenden, bifunktionellen Carbonatstruktureinheiten der oben angegebenen Formel (III), wobei die Menge dieser Carbonatstruktureinheiten der Formel (III) 5 bis 95 %, bezogen auf die Gesamtmolzahl dieser Struktureinheiten der Formeln (I) und (III), beträgt.

Insbesondere sind solche Copolycarbonate ausgenommen, die aus den unter C) angegebenen wiederkehrenden, bifunktionellen Carbonatstruktureinheiten der Formel (I) und der Formel (III) in den angegebenen Mengen aufgebaut sind, wobei in der Formel (III)

M für einen Methyl-, Propyl- oder Cyclohexyl-Rest, für O, S, SO, $SO_2$ oder CO und

$R_2$ bis $R_5$ jeweils für einen Methylrest stehen, oder

M für einen Propyl-Rest und

$R_2$ und $R_3$ jeweils für einen Methylrest und

$R_4$ und $R_5$ jeweils für Wasserstoff stehen.

Bevorzugte erfindungsgemäße Copolycarbonate sind solche, die 1 bis 99 mol-%, vorzugsweise 10 bis 90 mol-%, besonders bevorzugt 30 bis 70 mol-%, bezogen auf 100 mol-% der bifunktionellen Carbonatstruktureinheiten A und B, bifunktionelle Carbonatstruktureinheiten A aufweisen.

Die bifunktionellen Carbonatstruktureinheiten der Formel (I) leiten sich von Indanbisphenolen ab, deren Herstellung literaturbekannt ist. So wurde Indanbisphenol bisher aus Isopropenylphenol oder dessen Dimeren in Gegenwart eines Friedel-Craft-Katalysators, wie z.B. Bortrifluorid, Eisen(III)chlorid, Aluminiumoxid, Aluminiumtrichlorid, Halogencarbonsäuren oder Carbonsäuren in organischen Lösungsmitteln hergestellt (US-A 3 288 864, JP-A 60 035 150, US-A 4334 106). Indanbisphenole mit hoher Reinheit eignen sich insbesondere zur Herstellung der erfindungsgemäßen Copolycarbonate.

Die bifunktionellen Carbonatstruktureinheiten B leiten sich vorzugsweise von Diphenoiverbindungen der Formel (IIIa) ab

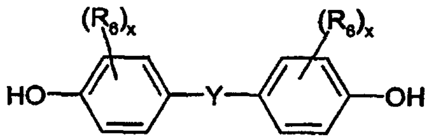

(IIIa),

in der die Reste

$R_6$ unabhängig voneinander, jeweils für einen $C_1$-$C_{12}$-Alkylrest, vorzugsweise $C_1$-$C_3$-Alkylrest, besonders bevorzugt Methyl, einen $C_6$-$C_{19}$-Aryl-, bevorzugt Phenylrest, einen $C_7$-$C_{12}$-Aralkyl-, bevorzugt Phenyl-$C_1$-$C_4$-Alkyl, besonders bevorzugt Benzylrest, Halogen, bevorzugt Chlor oder Brom,

X für eine ganze Zahl von 0 bis 3, vorzugsweise 0, und

Y für eine Einfachbindung, einen $C_1$-$C_6$-Alkylen-, $C_2$-$C_5$-Alkyliden-, $C_5$-$C_6$--Cycloalkylidenrest, der mit $C_1$-$C_6$-Alkyl, vorzugsweise Methyl oder Ethyl-Resten substituiert sein kann, ein $C_6$-$C_{12}$-Arylenrest, gegebenenfalls mit weiteren, Heteroatome enthaltenden aromatischen Ringen kondensiert sein kann, stehen.

Beispielhaft werden für diese Diphenole der Formel (IIIa) 4,4'-Dihydroxydiphenyl, 2,2-Bis-(4-hydroxyphenyl)-propan, 2,4-Bis-(4-hydroxyphenyl)-2-methylbutan, 2,2-Bis-(3-methyl-4-hydroxyphenyl)-propan, 2,2-Bis-(3-chlor-4-hydroxyphenyl)-propan, Bis-(3,3-dimethyl-4-hydroxyphenyl)-methan, 2,2-Bis-(3,5-dimethyl-4-hydroxyphenyl)-propan, 2,4-Bis-(3,5-dimethyl-4-hydroxyphenyl-2-methylbutan, 2,2,-Bis-(3,5-dichlor-4-hydroxyphenyl)-propan, 2,2-Bis-(3,5-dibrom-4-hydroxyphenyl)-propan, 1,1-Bis-(4-hydroxyphenyl)-3,3,5-trimethylcyclohexan und 1,1-Bis-(4-hydroxyphenyl)-cyclohexan, 6,6'-Dihydroxy-3,3,3',3'-tetramethyl-1,1'-spiro(bis)-indan, 9,9-Bis-(4-hydroxyphenyl)-fluoren genannt.

Bevorzugte Diphenole der Formel (IIIa) sind 2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan,

1,1-Bis-(4-hydroxyphenyl)-cyclohexan, 1,1-Bis-(4-hydroxyphenyl)-3,3,5-trimethylcyclohexan, 6,6'-Dihydroxy-3,3,3',3'-tetramethyl-1,1'-spiro(bis)-indan, 9,9-Bis-(4-hydroxyphenyl)fluoren, 4,4'-(m-Phenylendiisopropyliden)-diphenol.

Die Diphenole können einzeln oder als Gemisch aus mehreren Diphenolen zur Herstellung der erfindungsgemäßen Copolycarbonate eingesetzt werden.

Besonders bevorzugt leiten sich die Carbonat-Struktureinheiten der Formel (II) von 4,4'-(m-Phenylendiisopropyliden)-diphenol.

Die Herstellung der erfindungsgemäßen Copolycarbonate kann nach den bekannten drei Methoden erfolgen (vergl. H. Schnell "Chemistry and Physics of Polycarbonats", Polymerreview, Volume IX, Seite 27 ff, Interscience Publishers, New York 1964, sowie die DE-AS 1 495 626, DE-OS 22 32 877, DE-OS 27 03 376, DE-OS 27 14 544, DE-OS 30 00 610, DE-OS 38 32 396).

1. Nach dem Lösungsverfahren in disperser Phase, sogenanntes "Zweiphasengrenzflächenverfahren":

Hierbei werden die einzusetzenden Diphenole in wäßriger alkalischer Phase gelöst. Dazu werden gegebenenfalls die zur Herstellung der erfindungsgemäßen Co-Polycarbonate erforderlichen Kettenabbrecher in Mengen von 1,0 bis 20 mol-%, bezogen auf Mole Diphenol, in einer wäßrigen alkalischen Phase, vorzugsweise Natronlauge, gelöst, oder zu dieser und einer inerten organische Phase, in Substanz zugegeben. Dann wird in Gegenwart einer inerten, vorzugsweise polycarbonatlösenden, organischen Phase mit Phosgen umgesetzt. Die Reaktionstemperatur liegt zwischen 0°C und 50°C.

Die Zugabe der erforderlichen Kettenabbrecher und Verzweiger kann auch während der Phosgenierung oder solange Chlorkohlensäureester in dem Synthesegemisch vorhanden sind, in Substanz, als Schmelze, als Lösung in Alkali oder inerten organischen Lösungsmitteln, zugegeben werden.

Die Reaktion kann durch Katalysatoren, wie tertiäre Amine oder Oniumsalze beschleunigt werden. Bevorzugt sind Tributylamin, Triethylamin und N-Ethylpiperidin.

Neben oder anstelle der Diphenole können auch deren Chlorkohlensäureester und/oder Bischlorkohlensäureester eingesetzt oder während der Synthese zudosiert werden.

Geeignete Lösungsmittel sind beispielsweise Methylenchlorid, Chlorbenzol, Toluol und deren Mischungen.

2. Nach dem Lösungsverfahren in homogener Phase, auch "Pyridinverfahren" genannt:

Hierbei werden die Diphenole in organischen Basen wie Pyridin gelöst, gegebenenfalls unter Zusatz weiterer organischer Lösungsmittel, dann werden, wie unter 1. beschrieben, gegebenenfalls die zur Herstellung der erfindungsgemäßen Polycarbonate erforderlichen Kettenabbrecher und Verzweiger zugesetzt. Anschließend wird mit Phosgen umgesetzt. Die Reaktionstemperatur liegt zwischen 10 und 50°C. Geeignete organische Basen außer Pyridin sind z. B. Triethylamin, Tributylamin, N-Ethylpiperidin, sowie N,N-dialkylsubstituierte Aniline, wie N,N-Dimethylanilin. Geeignete Lösungsmittel sind beispielsweise Methylenchlorid, Chlorbenzol, Toluol, Tetrahydrofuran, 1,3-Dioxolan und deren Mischungen.

Neben den Diphenolen können auch bis zu 50 mol-%, bezogen auf die eingesetzten Phenole, von deren Bischlorkohlensäureester eingesetzt werden.

Die Isolierung der erfindungsgemäßen Polycarbonate erfolgt bei den Verfahren 1 und 2 in bekannter Weise. Geeignete Aufarbeitungsverfahren sind insbesondere das Ausfällen, die Sprühtrocknung und das Verdampfen des Lösungsmittel in Vakuum.

3. Nach dem Schmelzumesterungsverfahren:

In dem Schmelzumesterungsverfahren wird unter Zugabe von Diphenylcarbonat in stöchiometrischen Mengen oder im Überschuß von bis zu 40 %, unter stetiger destillativer Entfernung von Phenol und gegebenenfalls des Diphenylcarbonatüberschusses das Molekulargewicht aufkondensiert. Dieses Verfahren wird unter Verwendung üblicher Katalysatoren wie Alkalimetallionen, z.B. Li, Na, K, Übergangsmetallverbindungen, z.B. solchen auf Basis Sn, Zn, Ti oder Stickstoff- oder Phosphor-Basen, bevorzugt Ammonium- und Phosphonium-Salzen der allgemeinen Formel (III) bzw. (IV), vorzugsweise Phosphoniumhalogeniden oder -phenolaten als einstufiges oder zweistufiges Verfahren, also mit einer eventuellen getrennten Aufkondensation der Oligomeren und des Polymeren, durchgeführt.

In bekannter Weise können dabei Kettenabbrecher und/oder Verzweiger für die Herstellung der erfindungsgemäßen Copolycarbonate mitverwendet werden. Die entsprechenden Kettenabbrecher und/oder Verzweiger sind unter anderem aus der EP-A 335 214 und DE-A 30 07 934 bzw. EP-A 411 433 und DE-A 43 35 440 bekannt.

Die erfindungsgemäßen thermoplastischen Copolycarbonate weisen mittlere Molekulargewichte $\overline{M}_w$ (Gewichtsmittel ermittelt durch Gelchromatografie nach vorheriger Eichung) von wenigstens 9000, vorzugsweise zwischen 9000 und 30.000, besonders bevorzugt zwischen 10.000 und 20.000, auf.

Den erfindungsgemäßen Copolycarbonaten bzw. den entsprechenden Formmassen können vor, während oder nach ihrer Verarbeitung die für thermoplastische Polycarbonate üblichen Additive, wie Stabilisatoren, so z.B. Thermostabilisatoren, wie beispielsweise organische Phosphite, gegebenenfalls in Kombination mit monomeren oder oligomeren Epoxiden; UV-Stabilisatoren, insbesondere solchen auf Basis von stickstoffhaltigen Heterocyclen, wie Triazolen; optischen Aufhellern, Flammschutzmitteln, insbesondere fluorhaltigen, wie perfluorierte Salze organischer Säure, Polyperfluorethylen, Salzen organischer Sulfonsäuren und deren Kombinationen; Entformungsmitteln; Fließhilfsmitteln; Brandschutzmitteln; Farbmitteln; Pigmenten; Antistatika; Füll- und Verstärkungsstoffen, fein zerteilten Mineralien, Faserstoffen, z.B. Alkyl- und Arylphosphite, -phosphate, -phosphane, niedermolekulare Carbonsäureester, Halogenverbindungen, Salze, Kreide, Quarzmehl, Glas und Kohlenstoffasern in den üblichen Mengen zugesetzt werden.

Die erfindungsgemäßen Copolycarbonate können in bekannter Weise durch Spritzgießen oder Extrudieren auf bekannten Maschinen zu verschiedenen Formkörpern verarbeitet werden.

Erfindungsgemäße Copolycarbonate aus Carbonatstruktureinheiten der Formel (I) und aus Carbonatstruktureinheiten, die sich von Bisphenol M ableiten, und 1 bis 99 mol-%, vorzugsweise 10 bis 90 mol-%, besonders bevorzugt 30 bis 70 mol-%, bezogen auf 100 mol-% der bifimktionellen Carbonatstruktureinheiten A und B, bifunktionelle Carbonatstruktureinheiten A, eignen sich aufgrund ihrer niedrigen rheooptischen Konstante $C_R$, aber auch ihres sehr niedrigen Yellowness-Index $Y_1 \leq 2$ - wodurch eine Transmission auf hohem Niveau gegeben ist - und ihrer sehr guten Verarbeitungseigenschaften insbesondere zur Herstellung optischer Artikel, wie Linsen, Prismen, optischer Datenträger, Compakt-Disks, insbesondere aber zur Herstellung mehrfach lesbarer und wiederbeschreibbarer, optischer Datenträger für die Speicherung von optischen Informationen (Massenspeicher).

Der Yellowness-Index wird mit einem 4 mm dicken Spritzgußplättchen gemäß der Norm ASTM E 313/96 gemessen.

Insbesondere dafür müssen die erfindungsgemäßen Copolycarbonate einen hohen Reinheitsgrad aufweisen. Dies gelingt, indem man bei deren Aufarbeitung und Isolierung in bekannter Weise den Restmonomeren-, Lösungsmittel-, Fremdpartikel- (anorganischer oder organischer Art, insbesondere Salze und Staub) und den Chlorgehalt auf geringstmögliche Werte reduziert, entsprechend z.B. der Lehre der EP-A 380 002.

Ein weiterer Gegenstand der vorliegenden Erfindung ist daher die Verwendung der erfindungsgemäßen Copolycarbonate bzw. der entsprechenden Formmassen zur Herstellung von Formkörpern, insbesondere optischen Artikeln, bzw. die entsprechenden Formkörper vorzugsweise optischer Artikel, hergestellt aus den erfindungsgemäßen thermoplastischen Copolycarbonaten.

## Beispiele

### Bestimmung der rheooptischen Konstante $C_R$

Doppelbrechung in Spritzgußkörpern, eine der wichtigsten optischen Eigenschaften, läßt sich als Materialeigenschaft durch die rheooptische Konstante beschreiben. Diese kann positiv oder negativ sein. Je größer ihr absolsuterWert ist, um so größer ist die Doppelbrechung in spritzgegossenen Formteilen. Das Meßverfahren der rheooptischen Konstante ist bekannt (EP-A-0 621 297, Seite 4, Zeile 36 bis 45). Die dazu benötigten planparallelen 150 bis 1000-Mikrometer dicken -Probekörper können durch Schmelzpressen oder Filmgießen hergestellt werden.

Die **Molekulargewichtsbestimmung** erfolgt durch Messung der relativen Viskositäten bei 25°C in Methylenchlorid und einer Konzentration von 0,5 g pro 100 ml Methylenchlorid.

Die **$T_G$-Bestimmung** wurde entsprechend der Norm CEI/IEC 1074 vorgenommen.

## Beispiel 1

Folgendes Polycarbonat wurde hergestellt:

Tabelle 1

| Beispiel | Indanbisphenol (g) | Bisphenol M (g) |
|---|---|---|
| 1 | 43,8 | 26,0 |

Entsprechend den Mengenangaben in Tabelle 1 wird Indanbisphenol und Bisphenol M mit 22,0 g NaOH und 800 g Wasser unter Inertgas unter Rühren gelöst. Anschließend fügt man 600 ml Methylenchlorid hinzu. In die gut gerührte Lösung wurden bei 20 bis 25°C 49,5 g Phosgen mit einer Rate von ungefähr 2 g/min eingeleitet, wobei der pH-Wert durch Nachdosieren einer 45 %igen wäßrigen Natronlaugelösung bei 11 bis 14 gehalten wurde. Anschließend wurde eine solche Menge p-tert.-Butylphenol (ca. 2 g) zugegeben, daß eine Lösungsviskosität im Endprodukt von ca. 1,2 erreicht wurde. Ferner wurden weiterhin 0,35ml N-Ethylpiperidin zugegeben und noch 45 Minuten weiter gerührt.

Die bisphenolatfreie Lösung wurde abgetrennt, die organische Phase nach Ansäuern mit Wasser neutral gewaschen und vom Lösungsmittel befreit.

Das erhaltene Polycarbonat hat folgende in Tabelle 2 angegebene Eigenschaften:

Tabelle 2

| Beispiel | Glastemperatur (°C) | rheoopt. Konstante (1/GPa) | rel. Lösungsviskosität |
|---|---|---|---|
| 1 | 147 | 2,2 | 1,209 |

**Patentansprüche**

**1.** Copolycarbonate enthaltend als wiederkehrende, bifimktionelle Carbonatstruktureinheiten

A) wenigstens eine der Carbonatstruktureinheiten der Formel (I)

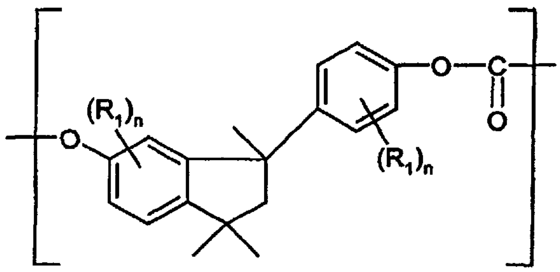

(I),

worin die Reste

$R_1$ unabhängig voneinander, jeweils für einen $C_1$-$C_{12}$-Alkylrest, ein Halogen, und

n für 0 stehen,

und

B) wenigstens eine der von A unterschiedlichen, weiteren bifunktionellen Carbonatstruktureinheiten der Formel (II)

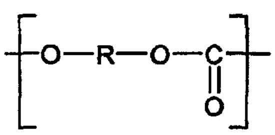

(II),

worin der Rest -O-R-O- für beliebige Diphenolat-Reste steht, in denen -R- ein aromatischer Rest mit 6 bis 40 C-Atomen ist, der einen oder mehrere aromatische oder kondensierte, gegebenenfalls Heteroatome enthaltende aromatische Kerne und mit $C_1$-$C_{12}$-Alkylresten oder Halogen substituiert sein und aliphatische Reste, cycloaliphatische Reste, aromatische Kerne oder Heteroatome als Brückglieder enthalten kann,
mit der Ausnahme von

C) Copolycarbonaten aufgebaut aus bifunktionellen wiederkehrenden Carbonatstruktureinheiten der Formel (I), in der die Reste $R_1$, unabhängig voneinander, jeweils für einen Kohlenwasserstoffrest mit 1 bis 5 C-Atomen und n für eine ganze Zahl von 0 bis 2 stehen und aus wenigstens einer der wiederkehrenden, bifunktionellen Carbonatstruktureinheiten der Formel (III)

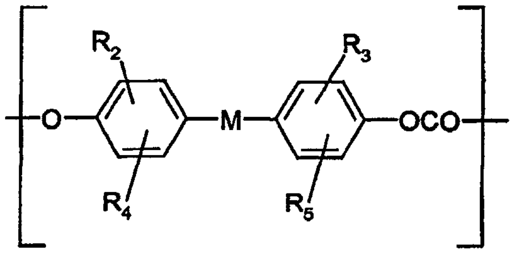

(III),

in der M für einen divalenten Kohlenwasserstoffrest mit 1 bis 8 C-Atomen, O, CO, S, SO oder $SO_2$ und $R_2$ bis $R_5$ gleich oder verschieden, jeweils für Wasserstoff oder ein Kohlenwasserstoffradikal mit 1 bis 5 C-Atomen stehen, wobei die Menge dieser Carbonatstruktureinheiten der Formel (III) 5 bis 95 %, bezogen auf die Gesamtmolzahl dieser Carbonat-Struktureinheiten der Formeln (I) und (III), beträgt.

**2.** Copolycarbonate nach Anspruch 1, **dadurch gekennzeichnet, daß** sich die bifunktionellen Carbonatstruktureinheiten der Formel (II) von 4,4'-(m-Phenylendiisopropyliden)-diphenol (Bisphenol M) ableiten.

**3.** Copolycarbonate nach Anspruch 1 oder 2, **dadurch gekennzeichnet, daß** sie 1 bis 99 mol-%, bezogen auf 100 mol-% der bifunktionellen Carbonatstruktureinheiten A und B, bifunktionelle Carbonatstruktureinheiten A enthalten.

**4.** Copolycarbonate nach einem der Ansprüche 1 bis 3 mit einem mittleren Molekulargewicht $\overline{M}_w$ von 9000 bis 30.000.

**5.** Formmassen aus Copolycarbonaten nach einem der Ansprüche 1 bis 4 enthaltend gegebenenfalls Hilfs- und Zusatzstoffe.

**6.** Formmassen nach Anspruch 5 mit einem Yellowness-Index $Y_1$<2.

**7.** Formkörper aus Formmassen nach Anspruch 6.

**8.** Optische Artikel enthaltend Copolycarbonate gemäß Anspruch 1.

**9.** Optische Massenspeicher enthaltend Copolycarbonate gemäß Anspruch 1.

**10.** Linsen enthaltend Copolycarbonate gemäß Anspruch 1.

## Claims

**1.** Copolycarbonates containing as recurring, bifunctional carbonate structural units

A) at least one of the carbonate structural units corresponding to formula (I)

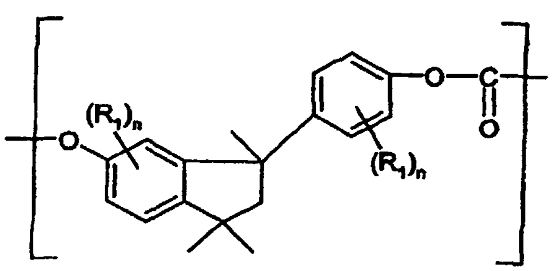

(I),

wherein the groups

$R_1$ independently of one another, each represent a $C_1$-$C_{12}$-alkyl group, a halogen, and

n represents 0,

and

B) at least one of the other bifunctional carbonate structural units, different from A, corresponding to formula (II)

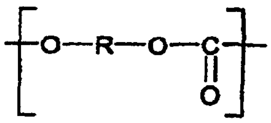

(II),

wherein the group -O-R-O- represents any diphenolate groups,
wherein -R- is an aromatic group having 6 to 40 C atoms, which can contain one or more aromatic or condensed, optionally containing hetero atoms, aromatic nuclei and can be substituted with $C_1$-$C_{12}$-alkyl groups or halogen and can contain aliphatic groups, cycloaliphatic groups, aromatic nuclei or hetero atoms as bridging links,
with the exception of

C) copolycarbonates built up from bifunctional recurring carbonate structural units corresponding to formula (I), wherein the groups $R_1$, independently of one another, each represent a hydrocarbon group having 1 to 5 C atoms and n represents an integer from 0 to 2 and from at least one of the recurring, bifunctional carbonate structural units corresponding to formula (III)

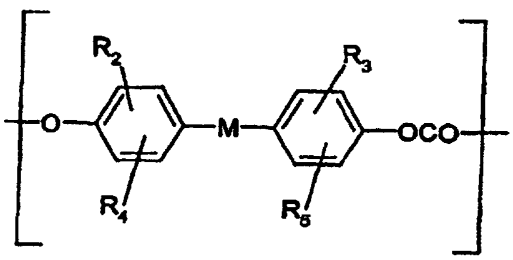

(III),

wherein M represents a divalent hydrocarbon group having 1 to 8 C atoms, O, CO, S, SO or $SO_2$ and
$R_2$ to $R_5$ are identical or different and each represent hydrogen or a hydrocarbon radical having 1 to 5 C atoms, the quantities of these carbonate structural units corresponding to formula (III) amounting to 5 to 95%, based on the total number of mols of structural units corresponding to formulae (I) and (III).

**2.** Copolycarbonates according to claim 1, **characterised in that** the bifunctional carbonate structural units corresponding to formula (II) are derived from 4,4'-(m-phenylenediisopropylidene)diphenol (bisphenol M).

**3.** Copolycarbonates according to claim 1 or 2,
**characterised in that** they contain from 1 to 99 mol-% of bifunctional carbonate structural units A, based on 100 mol-% of bifunctional carbonate structural units A and B.

**4.** Copolycarbonates according to one of claims 1 to 3 having an average molecular weight $\overline{M}_w$ of 9000 to 30,000.

**5.** Moulding compositions made from copolycarbonates according to one of claims 1 to 4 optionally containing auxiliary substances and additives.

**6.** Moulding compositions according to claim 5 having a Yellowness Index $Y_1$<2.

**7.** Mouldings made from moulding compositions according to claim 6.

**8.** Optical articles containing copolycarbonates according to claim 1.

**9.** Optical mass storage devices containing copolycarbonates according to claim 1.

**10.** Lenses containing copolycarbonates according to claim 1.

**Revendications**

**1.** Copolycarbonates contenant en tant que motifs de structure bifonctionnels carbonates répétés

A) au moins l'un des motifs de structure carbonates de formule (I)

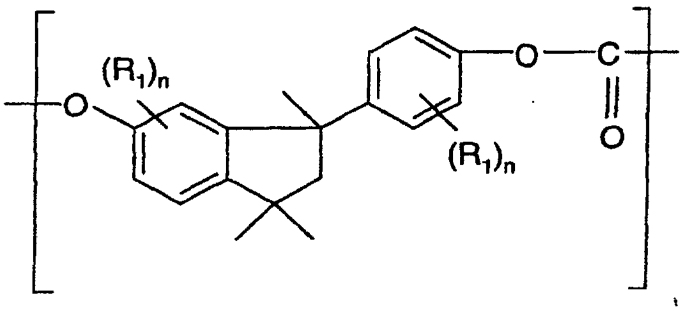

(I),

dans laquelle les symboles $R_1$ représentent chacun, indépendamment les uns des autres, un groupe alkyle en $C_1$-$C_{12}$, un halogène, et n est égal à 0,
et
B) au moins un des autres motifs de structure bifonctionnels carbonates différents de A, et répondant à la formule (II)

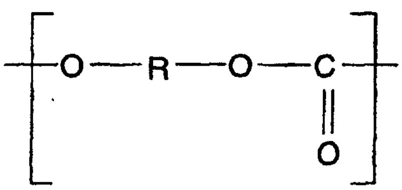

(II),

dans laquelle -O-R-O- est un radical de diphénolate quelconque, -R- représentant un radical aromatique en $C_6$-$C_{40}$ qui peut contenir un ou plusieurs cycles aromatiques ou condensés, contenant le cas échéant des hétéroatomes, peut être substitué par des groupes allyles en $C_1$-$C_{12}$ ou des halogènes et peut contenir des radicaux aliphatiques, des radicaux cycloaliphatiques, des noyaux aromatiques ou des hétéroatomes en tant que chaînons de ponts, à l'exception de
C) les copolycarbonates constitués de motifs de structure bifonctionnels carbonates répétés de formule (I) dans laquelle les symboles $R_1$ représentent chacun, indépendamment les uns des autres, un radical hydrocarboné en $C_1$-$C_5$ et n est un nombre entier allant de 0 à 2, et d'au moins un des motifs de structure bifonctionnels carbonates répétés de formule (III)

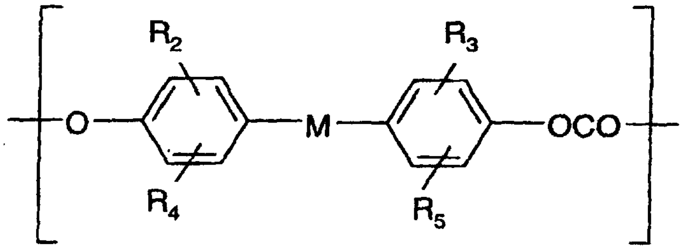

(III),

dans laquelle M représente un radical hydrocarboné divalent en $C_1$-$C_8$, O, CO, S, SO ou $SO_2$ et $R_2$ à $R_5$, ayant des significations identiques ou différentes, représentent chacun l'hydrogène ou un radical hydrocarboné en $C_1$-$C_5$, la proportion de ces motifs de structures carbonates de formule (III) représentant 5 à 95 % du nombre de moles total de ces motifs de structure carbonates de formules (I) et (III).

**2.** Copolycarbonates selon revendication 1, **caractérisés en ce que** les motifs de structure bifonctionnels carbonates de formule (II) dérivent du 4,4'-(m-phénylènediisopropylidène)-diphénol (bisphénol M).

**3.** Copolycarbonates selon revendications 1 ou 2, **caractérisés en ce qu'**ils contiennent de 1 à 99 mol% des motifs de structure bifonctionnels carbonates A pour 100 mol% des motifs de structure bifonctionnels carbonates A et B.

**4.** Copolycarbonates selon l'une des revendications 1 à 3, à un poids moléculaire moyen $\overline{M}_w$ de 9 000 à 30 000.

**5.** Matières à mouler en copolycarbonates selon l'une des revendications 1 à 4, contenant le cas échéant des produits auxiliaires et additifs.

**6.** Matières à mouler selon revendication 5, ayant un indice I de jaune J ("Yellowness-Index") $Y_1 < 2$.

**7.** Corps moulés à partir des matières à mouler selon revendication 6.

**8.** Articles optiques contenant des copolycarbonates selon revendication 1.

**9.** Mémoires optiques de masse contenant des copolycarbonates selon revendication 1.

**10.** Lentilles contenant des copolycarbonates selon revendication 1.